# EUROPEAN PATENT APPLICATION

(11) **EP 3 991 959 A1**
(43) Date of publication of application: **04.05.2022**
(21) Application number: 20832361.8
(22) Date of filing: 18.06.2020
(51) Int. Cl.: B30B 9/14, C02F 3/12, C02F 3/30, C02F 11/121

(54) **SCREW-TYPE SEPARATION APPARATUS, CAGING, EFFLUENT TREATMENT SYSTEM, AND CLEANING METHOD FOR SCREW-TYPE SEPARATION APPARATUS**

(30) Priority: 28.06.2019 JP 2019122388
(71) Applicant: Metawater Co., Ltd., Tokyo 101-0041 (JP)
(72) Inventor: INOUE, Satoshi, Tokyo 101-0041 (JP); HASHIMOTO, Yoshitaka, Tokyo 101-0041 (JP); ANDO, Yoshinori, Tokyo 101-0041 (JP); YOSHIDA, Takuya, Tokyo 101-0041 (JP)
(74) Representative: TBK
(86) International application number: PCT/JP2020/024045
(87) International publication number: WO 2020/262207

(57) **Abstract**

To suppress a decrease in discharge efficiency of an object. A screw-type separation device 1 includes a casing 10 including an object discharging port 31B provided on one end part 30B side and discharging an object A having been dehydrated, and a separated liquid discharging port 31C provided on another end part 30C side and discharging separated liquid C having been separated from the object A by dehydration; a screw shaft 12 provided inside the casing 10 and extending in an extending direction E that is a direction from the one end part 30B to the other end part 30C; a first screw blade 14 extending spirally on an outer peripheral surface of the screw shaft 12; and a second screw blade 16 extending spirally on the outer peripheral surface of the screw shaft 12 such that a predetermined gap is formed with respect to the first screw blade 14 in the extending direction E. A groove 34 is formed on an inner peripheral surface 32a of the casing 10.

## Description

### Field

The present invention relates to a screw-type separation device, a casing, a wastewater treatment system, and a cleaning method of a screw-type separation device. Background

Conventionally, methods adopted for what is called a separation device such as a concentrator and a dehydrator include a centrifugation method, a flotation concentration method, a screen concentration dehydration method, and the like. Moreover, a screw-type separation device that conveys, squeezes, and dehydrates an object, by feeding sludge such as sewage and industrial liquid waste with high water content as an object into a cylindrical-shaped casing, and by rotating a screw provided in the casing, has been used.

For example, Patent Literature 1 discloses a device that conveys and squeezes sludge, by rotating a screw provided with two screw blades. In this device, a first region and a second region interposed between the two screw blades are formed inside a casing the side surface of which is provided with a sludge feeding port. In the device, sludge is squeezed, dehydrated, and conveyed in the first region, and the dehydrated sludge is discharged. Moreover, in the device, separated liquid generated by dehydration is conveyed in the second region, and the separated liquid is discharged.

### Citation List

### Patent Literature

Patent Literature 1: WO2015/186612

### Summary

### Technical Problem

However, in such a device, sludge may not slide on the surface of the screw blade, and may rotate with the screw blade and stay on the screw blade. In such a case, it is difficult to convey the sludge to a sludge discharging port, and the discharge efficiency of sludge may be decreased. Thus, it has been desired to suppress a decrease in the discharge efficiency of an object to be dehydrated such as sludge.

The present invention has been made in view of the above, and an object of the present invention is to provide a screw-type separation device, a casing, a wastewater treatment system, and a cleaning method of a screw-type separation device capable of suppressing a decrease in the discharge efficiency of an object. Solution to Problem

To solve the problem and achieve the object above, a screw type separation device in the present disclosure includes; a casing including an object discharging port provided on one end part side and discharging an object having been dehydrated, and a separated liquid discharging port provided on another end part side and discharging separated liquid having been separated from the object by dehydration; a screw shaft provided inside the casing and extending in an extending direction that is a direction from the one end part to the another end part; a first screw blade extending spirally on an outer peripheral surface of the screw shaft; and a second screw blade extending spirally on the outer peripheral surface of the screw shaft such that a predetermined gap is formed with respect to the first screw blade in the extending direction, wherein a groove is formed on an inner peripheral surface of the casing.

It is preferable that the groove extends in the extending direction.

It is preferable that in the groove, width of an inlet part that is opened on the inner peripheral surface of the casing is smaller than width of a space on a radially outer side of the inlet part

It is preferable that width of the groove is increased from the inlet part toward a radially outer side.

It is preferable that viewed from the extending direction, the groove is inclined to a rotation direction side of the screw shaft toward a radially inner side.

It is preferable that in the groove, an opening area of the inlet part that is opened on the inner peripheral surface of the casing in an end part at the separated liquid discharging port side is greater than an opening area of the inlet part at the object discharging port side of the end part.

It is preferable that the casing includes a first casing, and a second casing that is inserted into inside of the first casing and an inner peripheral surface of which is formed with the groove.

It is preferable that in the casing, at least a portion formed with the groove is made of resin.

To solve the problem and achieve the object above, a wastewater treatment system in the present disclosure includes; a solid-liquid separation tank that separates sludge from organic wastewater, and the screw-type separation device, wherein the screw-type separation device is capable of concentrating sludge discharged from the solid-liquid separation tank, and returning the separated liquid generated when the sludge is concentrated to the solid-liquid separation tank.

It is preferable that the screw-type separation device is provided in the solid-liquid separation tank.

To solve the problem and achieve the object above, a casing for a screw-type separation device in the present disclosure stores therein a screw, the screw including a screw shaft extending in an extending direction that is a direction from one end part to another end part, a first screw blade extending spirally on an outer peripheral surface of the screw shaft, and a second screw blade extending spirally on the outer peripheral surface of the screw shaft such that a predetermined gap is formed with respect to the first screw shaft in the extending direction, wherein, a groove is formed on an inner peripheral surface of the casing.

To solve the problem and achieve the object above, a wastewater treatment system in the present disclosure includes; a reaction tank that performs biological treatment on organic wastewater; a solid-liquid separation tank that separates sludge from the organic wastewater; and the screw-type separation device, wherein the screw-type separation device is capable of extracting sludge from the reaction tank, concentrating the extracted sludge, returning the concentrated sludge to the reaction tank, and supplying the separated liquid generated when the sludge is concentrated to the solid-liquid separation tank.

To solve the problem and achieve the object above, a cleaning method of the screw-type separation device in the present disclosure includes; a step of closing the object discharging port; a step of accumulating a cleaning solution in the casing and the groove, by supplying the cleaning solution into the casing while the object discharging port is closed; and a step of discharging the cleaning solution accumulated in the casing and the groove from the object discharging port, by opening the object discharging port after the step of accumulating.

### Advantageous Effects of Invention

With the present invention, it is possible to suppress a decrease in the discharge efficiency of sludge.

### Brief Description of Drawings

FIG. 1 is a partial sectional view of a screw-type separation device according to the present embodiment.
FIG. 2 is a sectional view of the screw-type separation device according to the present embodiment.
FIG. 3 is a schematic diagram illustrating another example of a groove according to the present embodiment.
FIG. 4 is a schematic diagram illustrating the groove according to the present embodiment.
FIG. 5A is a schematic diagram illustrating the groove according to the present embodiment.
FIG. 5B is a schematic diagram illustrating the groove according to the present embodiment.
FIG. 6 is a schematic diagram for explaining an operation of the screw-type separation device according to the present embodiment.
FIG. 7 is a partial sectional view of a screw-type separation device according to another example of the present embodiment.
FIG. 8 is a schematic diagram of a screw according to the other example of the present embodiment.
FIG. 9 is a schematic diagram of a screw according to the other example of the present embodiment.
FIG. 10 is a flowchart for explaining a cleaning method of the screw-type separation device according to the present embodiment.
FIG. 11 is a configuration diagram illustrating a part of a wastewater treatment system according to a first example.
FIG. 12 is a schematic diagram illustrating a sedimentation basin for explaining a modification of the first example.
FIG. 13 is a configuration diagram illustrating a part of a wastewater treatment system according to a second example.

### Description of Embodiments

Hereinafter, a preferred embodiment of the present invention will be described in detail with reference to the accompanying drawings. However, the present invention is not limited to the embodiment described below.

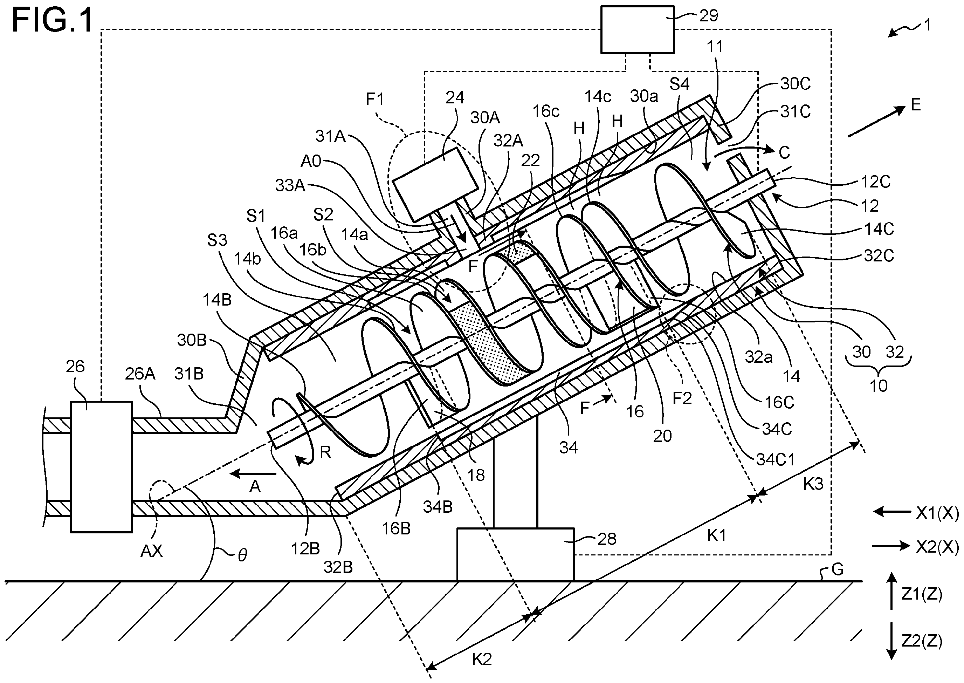

Configuration of Screw-type Separation Device FIG. 1 is a partial sectional view of a screw-type separation device according to the present embodiment. As illustrated in FIG. 1, a screw-type separation device 1 according to the present embodiment includes a casing 10 provided with a first casing 30 and a second casing 32, a screw shaft 12, a first screw blade 14, a second screw blade 16, a first partition wall part 18, a second partition wall part 20, a cover part 22, a feeding unit 24, a discharge pump 26, an inclination adjusting unit 28, and a control unit 29. A unit provided with the screw shaft 12, the first screw blade 14, and the second screw blade 16 may be referred to as a screw 11. The screw-type separation device 1 dehydrates a pre-object A0 fed into the casing 10 from an object feeding port 31A, which will be described below, and discharges an object A having been dehydrated from an object discharging port 31B, which will be described below. Then, the screw-type separation device 1 discharges separated liquid C, which is separated from the pre-object A0 by dehydration, from a separated liquid discharging port 31C, which will be described below. The pre-object A0 is sludge such as sewage and industrial liquid waste with high water content. The pre-object A0 is an object before being dehydrated by the screw-type separation device 1, and in the present embodiment, is sludge such as sewage and industrial liquid waste with high water content. Additionally, the pre-object A0 is sludge added with a flocculating agent, and sludge containing flocculated solid components and moisture. In the present embodiment, for example, by using a device provided at a previous stage of the screw-type separation device 1, the pre-object A0, which is a solid material containing a liquid component, is generated by adding a flocculating agent and flocculating the solid component. However, the properties of the pre-object A0 are optional, and for example, the pre-object A0 may also be sludge not added with a flocculating agent and not flocculated.

Hereinafter, a direction parallel to a ground surface G, that is, a horizontal direction, is referred to as a direction X. One direction in the direction X is referred to as a direction X1, and the other direction in the direction X, that is, a direction opposite to the direction X1 is referred to as a direction X2. Moreover, a direction orthogonal to the direction X, and a direction orthogonal to the ground surface G, that is, a vertical direction, is referred to as a direction Z. Then, one direction in the direction Z is referred to as a direction Z1, and the other direction in the direction Z, that is, a direction opposite to the direction Z1, is referred to as a direction Z2. The direction Z1 is an upward direction in the vertical direction, that is, a direction away from the ground surface G. The direction Z2 is a downward direction in the vertical direction, that is, a direction toward the ground surface G side.

The first casing 30 in the casing 10 is a tubular member that extends from one end part 30B to another end part 30C in an extending direction E, and in which space is formed. In the example of FIG. 1, the diameter of the first casing 30 at the end part 30B side is reduced. However, the diameter of the first casing 30 may not always be reduced. For example, the first casing 30 may also be formed in a cylindrical shape such that the diameter from the end part 30B to the end part 30C is constant. For example, in the first casing 30, the diameter of a part where the diameter is not reduced is about 20 cm or more to 50 cm or less. However, the size of diameter is optional. The extending direction E is an axis direction of the first casing 30. The extending direction E is a direction from the end part 30B side toward the end part 30C side (direction X2 side), and is inclined to the direction Z1 side with respect to the direction X2, from the end part 30B side toward the end part 30C side. That is, the first casing 30 is inclined in a direction in which a center axis AX in the extending direction E moves (is placed) toward the direction Z1 side, toward the end part 30C (direction X2 side). Thus, the end part 30B of the first casing 30 is placed at the direction Z2 side of the end part 30C. A gradient angle θ of the first casing 30 is preferably 20 degrees or more and 90 degrees or less, and more preferably 60 degrees or more and 90 degrees or less. The gradient angle θ is a gradient angle of the center axis AX with respect to the horizontal direction X (ground surface G).

In the present embodiment, the first casing 30 is a member made of metal (for example, made of stainless steel). However, the material of the first casing 30 is not limited to metal, and is optional. For example, the first casing 30 may also be made of resin.

In the first casing 30, the object discharging port 31B is opened on the end part 30B, and the separated liquid discharging port 31C is opened on the end part 30C. The separated liquid discharging port 31C is an opening different from a hole through which the screw shaft 12 passes, and is provided on the direction Z1 side of the screw shaft 12. However, the separated liquid discharging port 31C may not be provided on the direction Z1 side of the screw shaft 12. For example, the separated liquid discharging port 31C may be provided on the direction Z2 side of the screw shaft 12 in the end part 30C, or may be provided on the same position as that of the screw shaft 12, and such that the screw shaft 12 can penetrate therethrough. Moreover, the separated liquid discharging port 31C may also be provided on the outer peripheral surface (side surface) of the casing 10 in a separated liquid conveyance section K3, which will be described below. The object discharging port 31B is placed on the direction Z2 side of the separated liquid discharging port 31C. In the present embodiment, the screw shaft 12 can penetrate through the inside of the object discharging port 31B. However, the screw shaft 12 may not penetrate through the object discharging port 31B. Moreover, the object discharging port 31B may be provided on the outer peripheral surface (side surface) of the casing 10 in an object conveyance section K2, which will be described below. That is, in the first casing 30, at least the separated liquid discharging port 31C is placed on the end part 30C side of the object discharging port 31B, and the object discharging port 31B is placed on the end part 30B side of the separated liquid discharging port 31C.

In the first casing 30, the object feeding port 31A is opened on a middle part 30A. The middle part 30A is a part between the end part 30B and the end part 30C in the extending direction E of the first casing 30. In other words, the middle part 30A is a part between the object discharging port 31B and the separated liquid discharging port 31C in the extending direction E. The middle part 30A is placed on the center of the first casing 30 in the extending direction E, but may be placed on any position between the end part 30B and the end part 30C in the extending direction E. For example, the length of the first casing 30 from the end part 30B to the middle part 30A in the extending direction E is preferably 30% or more and 90% or less, with respect to the total length of the first casing 30 in the extending direction E. The object feeding port 31A is opened on the outer peripheral surface (side surface) of the first casing 30 of the middle part 30A.

The second casing 32 is a tubular-shaped member to be inserted into the first casing 30. The second casing 32 is inserted into the first casing 30 so as to be coaxial with the first casing 30, and is fixed to the inside of the first casing 30 such that the outer peripheral surface of the second casing 32 is brought into contact with an inner peripheral surface 30a of the first casing 30. The second casing 32 extends from one end part 32B to another end part 32C in the extending direction E. In the second casing 32, the end part 32B is positioned substantially the same as the end part 30B of the first casing 30 in the extending direction E, and the end part 32C is positioned substantially the same as the end part 30C of the first casing 30 in the extending direction E. Because the second casing 32 is coaxial with the first casing 30, the center axis AX also becomes the center axis of the second casing 32.

In the present embodiment, the second casing 32 is a member made of resin, and for example, is manufactured by a 3D printer (three-dimensional lamination device). However, the material of the second casing 32 is optional, and for example, the second casing 32 may be made of metal (such as stainless steel). A manufacturing method of the second casing 32 is also optional.

In the second casing 32, an opening part 33A is opened on the outer peripheral surface (side surface) at a position overlapping with the object feeding port 31A of the first casing 30. The opening part 33A communicates with the object feeding port 31A. Moreover, the end part 32B of the second casing 32 which is opened, communicates with the object discharging port 31B of the first casing 30. The end part 32C of the second casing 32 which is opened, communicates with the separated liquid discharging port 31C of the first casing 30. In the second casing 32, a groove 34 is formed on an inner peripheral surface 32a. The groove 34 will be described below.

In this manner, in the casing 10 of the present embodiment, the first casing 30 and the second casing 32 are formed by different members. However, the casing 10 may be formed by an integral member. In either case of an integral member or a plurality of members, the casing 10 is configured such that the casing 10 extends around the center axis AX in the extending direction E, the object discharging port 31B is provided on the end part 30B side in the direction X1 side, the separated liquid discharging port 31C is provided on the end part 30C side of the direction X2 side, the object feeding port 31A is provided on the middle part 30A, and the groove 34 is formed on the inner peripheral surface 32a. When the casing 10 is formed of an integral member, the entire casing 10 is preferably made of resin.

The screw shaft 12 is formed in a cylindrical shape, is provided inside the casing 10, and extends in the extending direction E. In the casing 10, the screw shaft 12 is provided so as to penetrate through the casing 10 in the extending direction E. That is, one end part 12B of the screw shaft 12 is placed on the end part 30B side of the casing 10, and protrudes to the outside of the casing 10 from the end part 30B of the casing 10. Similarly, another end part 12C of the screw shaft 12 is placed on the end part 30C side of the casing 10, and protrudes to the outside of the casing 10 from the end part 30C of the casing 10. In the screw shaft 12, at least one of the end part 12B and the end part 12C is coupled to a motor, which is axially supported by a bearing (both are not illustrated). When the motor is driven by the control unit 29, the screw shaft 12 is rotated in a rotation direction R with the extending direction E as an axial center. In the present embodiment, when viewed from the end part 12C side, the rotation direction R is a counterclockwise direction. However, it is not limited thereto. In the present embodiment, the screw shaft 12 is a member made of metal (for example, made of stainless steel). However, the material of the screw shaft 12 is not limited to metal, and is optional. For example, the screw shaft 12 may also be made of resin.

The first screw blade 14 is provided as to extend spirally on the outer peripheral surface of the screw shaft 12 in the casing 10, from one end part 14B to another end part 14C. The end part 14B is a position where winding of the first screw blade 14 is started, and is an end part on the object discharging port 31B (end part 30B) side of the casing 10. The end part 14B is placed on the object discharging port 31B (end part 30C) side of the object feeding port 31A (middle part 30A). Moreover, the end part 14C is a position where winding of the first screw blade 14 is ended, and is an end part on the separated liquid discharging port 31C (end part 30C) side of the casing 10. The end part 14C is placed on the separated liquid discharging port 31C (end part 30C) side of the object feeding port 31A (middle part 30A). The first screw blade 14 extends from the end part 14B to the end part 14C via a portion overlapping with the object feeding port 31A, when viewed from the radial direction of the center axis AX.

The first screw blade 14 is wound in a direction opposite to the rotation direction R of the screw shaft 12 from the end part 14C toward the end part 14B. That is, when the rotation direction R of the screw shaft 12 is a counterclockwise direction viewed from the end part 12C side, the first screw blade 14 is provided in what is called a Z-winding (right hand) spiral. Alternatively, when the rotation direction R of the screw shaft 12 is a clockwise direction viewed from the end part 12C side, the first screw blade 14 is provided in what is called an S-winding (left hand) spiral. The first screw blade 14 is rotated with the rotation of the screw shaft 12.

The first screw blade 14 is formed such that a gap H is generated between an outer peripheral part 14c and the inner peripheral surface 32a of the casing 10. That is, the outer peripheral part 14c of the first screw blade 14 does not come into contact with the inner peripheral surface 32a of the casing 10, and is separated from the inner peripheral surface 32a with the gap H interposed therebetween. The gap H is a minute clearance, and has a size capable of suppressing (blocking) at least a part of the object A from passing through. Moreover, the gap H is large enough so that a liquid component such as the separated liquid C can pass through. For example, the gap H is a clearance of about 1 mm or more and 2 mm or less.

In the casing 10, the second screw blade 16 extends spirally on the outer peripheral surface of the screw shaft 12 in the extending direction E. The second screw blade 16 is provided on a position shifted from the first screw blade 14 such that a predetermined gap is formed with respect to the first screw blade 14 in the extending direction E, and is wound in the same winding direction as that of the first screw blade 14. The second screw blade 16 is also rotated with the rotation of the screw shaft 12. The second screw blade 16 extends spirally from one end part 16B to another end part 16C. The end part 16B is a position where winding of the second screw blade 16 is started, and placed between the end part 14B of the first screw blade 14 and the object feeding port 31A in the extending direction E. The end part 16C is a position where winding of the second screw blade 16 is ended, and is placed between the end part 14C of the first screw blade 14 and the object feeding port 31A in the extending direction E. Thus, the second screw blade 16 extends from the end part 16B to the end part 16C via a portion overlapping with the object feeding port 31A, viewed from the radial direction of the center axis AX. The end part 16B and the end part 16C of the second screw blade 16 may not placed on the positions described above. For example, the end part 16B of the second screw blade 16 may be placed on the same position as the end part 14B of the first screw blade 14 in the extending direction E, and the end part 16C of the second screw blade 16 may be placed on the same position as the end part 14C of the first screw blade 14 in the extending direction E.

The second screw blade 16 is formed such that the gap H is generated between an outer peripheral part 16c and the inner peripheral surface 32a of the casing 10. That is, the outer peripheral part 16c of the second screw blade 16 does not come into contact with the inner peripheral surface 32a of the casing 10, and is separated from the inner peripheral surface 32a with the gap H interposed therebetween. In the present embodiment, the first screw blade 14 and the second screw blade 16 are made of resin, and for example, manufactured by a 3D printer. However, the material of the first screw blade 14 and the second screw blade 16 is not limited to resin, and is optional. For example, the first screw blade 14 and the second screw blade 16 may also be made of metal (such as stainless steel). A manufacturing method of the first screw blade 14 and the second screw blade 16 is also optional.

Because the first screw blade 14 and the second screw blade 16 are provided on the positions as described above, the first screw blade 14 and the second screw blade 16 are both provided in a section from the end part 16B to the end part 16C of the second screw blade 16 (hereinafter, this section will be referred to as a conveyance acceleration section K1). Moreover, the first screw blade 14 is provided but the second screw blade 16 is not provided in a section from the end part 16B of the second screw blade 16 to the end part 14B of the first screw blade 14 (hereinafter, this section will be referred to as the object conveyance section K2). Furthermore, the first screw blade 14 is provided but the second screw blade 16 is not provided in a section from the end part 16C of the second screw blade 16 to the end part 14C of the first screw blade 14 (hereinafter, this section will be referred to as the separated liquid conveyance section K3).

The conveyance acceleration section K1 is a double screw section in which the first screw blade 14 and the second screw blade 16 are provided. The conveyance acceleration section K1 is a section between the object conveyance section K2 and the separated liquid conveyance section K3 in the extending direction E. Viewed from the radial direction of the center axis AX, at least a part of the section of the conveyance acceleration section K1 is set so as to overlap with the object feeding port 31A. In other words, at least a part of the conveyance acceleration section K1 is placed on the same position as the object feeding port 31A in the extending direction E. The length of the conveyance acceleration section K1 in the extending direction E is preferably 20% or more and 60% or less of the total length of the casing 10 in the extending direction.

In the conveyance acceleration section K1, a first space S1 in which the object A is conveyed, and a second space S2 in which the separated liquid C is conveyed are formed. The first space S1 is formed between one surface 16a of the second screw blade 16 and another surface 14b of the first screw blade 14 that faces the one surface 16a. The second space S2 is formed between another surface 16b of the second screw blade 16 and one surface 14a of the first screw blade 14 that faces the other surface 16b. In FIG. 1, the surface at the end part 14B side of the first screw blade 14 is referred to as the one surface 14a, and the surface at the end part 14C side is referred to as the other surface 14b. However, it is not limited thereto, and the surface at the end part 14C side may be referred to as the one surface 14a, and the surface at the end part 14B side may be referred to as the other surface 14b. Similarly, in FIG. 1, the surface at the end part 16B side of the second screw blade 16 is referred to as the one surface 16a, and the surface at the end part 16C side is referred to as the other surface 16b. However, it is not limited thereto, and the surface at the end part 16C side may be referred to as the one surface 16a, and the surface at the end part 16B side may be referred to as the other surface 16b.

The object conveyance section K2 is a section at the end part 30B side of the casing 10, that is, a section at the object discharging port 31B side, than the conveyance acceleration section K1. Space S3 in the object conveyance section K2 communicates with the object discharging port 31B. Moreover, the space S3 communicates with the first space S1 in the conveyance acceleration section K1, and the object A flows into the space S3 from the first space S1. Because the space S3 is shielded by the first partition wall part 18, which will be described below, the space S3 is isolated from the second space S2 in the conveyance acceleration section K1 in a region other than the gap H. In the present embodiment, the object conveyance section K2 is a single screw section in which the first screw blade 14 is provided but the second screw blade 16 is not provided. However, when the end part 14B of the first screw blade 14 and the end part 16B of the second screw blade 16 are provided on the same position, the object conveyance section K2 will be a section in which neither the first screw blade 14 nor the second screw blade 16 is provided.

The separated liquid conveyance section K3 is a section at the end part 30C side of the casing 10, that is, a section at the separated liquid discharging port 31C side, than the conveyance acceleration section K1. Space S4 in the separated liquid conveyance section K3 communicates with the separated liquid discharging port 31C. Moreover, the space S4 communicates with the second space S2 in the conveyance acceleration section K1, and the separated liquid C flows into the space S4 from the second space S2. Because the space S4 is shielded by the second partition wall part 20, which will be described below, the space S4 is isolated from the first space S1 in the conveyance acceleration section K1, in a region other than the gap H. In the present embodiment, the separated liquid conveyance section K3 is a single screw section in which the first screw blade 14 is provided but the second screw blade 16 is not provided. However, when the end part 14B of the first screw blade 14 and the end part 16B of the second screw blade 16 are provided on the same position, the separated liquid conveyance section K3 will be a section in which neither the first screw blade 14 nor the second screw blade 16 is provided.

The groove 34 is formed on the inner peripheral surface 32a of the second casing 32 in the conveyance acceleration section K1. On the inner peripheral surface 32a of the second casing 32, the groove 34 extends from an end part 34B to an end part 34C in the extending direction E. The end part 34B is an end part at the object discharging port 31B side of the groove 34, and is placed between the object discharging port 31B and the object feeding port 31A in the extending direction E. Additionally, the end part 34B is preferably provided on the same position as the end part 16B of the second screw blade 16 in the extending direction E, that is, at a boundary between the conveyance acceleration section K1 and the object conveyance section K2. Moreover, the end part 34C is an end part at the separated liquid discharging port 31C side of the groove 34, and is placed between the separated liquid discharging port 31C and the object feeding port 31A in the extending direction E. Additionally, the end part 34C is preferably provided at the separated liquid conveyance section K3 side (that is, in the separated liquid conveyance section K3) than the same position of the end part 16C of the second screw blade 16 in the extending direction E (boundary between the conveyance acceleration section K1 and the separated liquid conveyance section K3).

In this manner, the groove 34 extends in the conveyance acceleration section K1, and extends into the separated liquid conveyance section K3 at the end part 34C side. However, the groove 34 not only extends in the conveyance acceleration section K1 and the separated liquid conveyance section K3, and may be provided up to the object conveyance section K2.

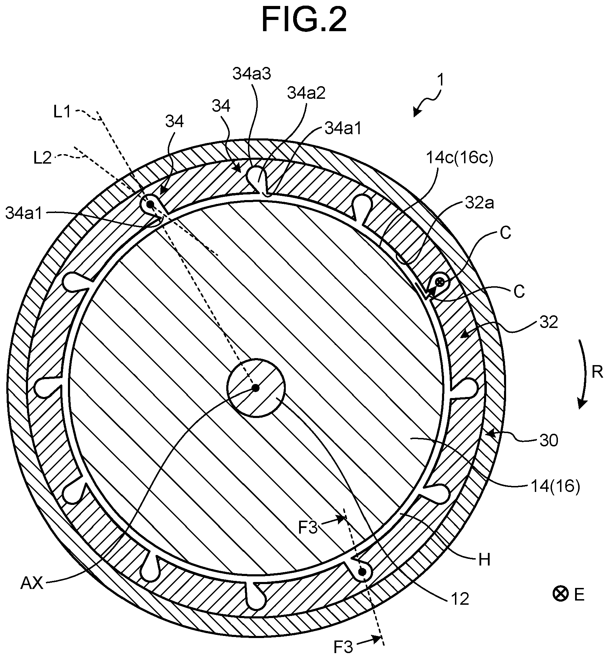

FIG. 2 is a sectional view of the screw-type separation device according to the present embodiment. FIG. 2 is a sectional view cut along the line F-F in FIG. 1, and is a sectional view when the screw-type separation device 1 is viewed in the extending direction E. In below, unless otherwise specified, a circumferential direction and a radial direction are the circumferential direction and the radial direction around the center axis AX. As illustrated in FIG. 2, on the inner peripheral surface 32a of the second casing 32, a plurality of the grooves 34 are provided in the circumferential direction. In the example in FIG. 2, twelve grooves 34 are provided. However, the number of the grooves 34 is not limited to twelve, and is optional. An inlet part 34a1 provided as an end part of each of the groove 34 on the radially inner side (a side approaching the center axis AX) is opened on the inner peripheral surface 32a. That is, the inlet part 34a1 is an opening portion of the groove 34. The width of the groove 34 is increased from the inlet part 34a1 to a middle part 34a2 on the radially outer side relative to the inlet part 34a1, toward the radially outer side (a side away from the center axis AX). In this example, the width is the length in the circumferential direction. The width of the groove 34 is reduced from the middle part 34a2 to a bottom part 34a3 of the groove 34 on the radially outer side, toward the radially outer side. The width of the groove 34 is increased in a straight line manner from the inlet part 34a1 to the middle part 34a2, toward the radially outer side. The width of the groove 34 is reduced in a curved line manner from the middle part 34a2 to the bottom part 34a3, toward the radially outer side. In other words, viewed in the extending direction E, the groove 34 is formed in a trapezoid shape in which the width is increased toward the radially outer side, from the inlet part 34a1 to the middle part 34a2. The groove 34 is also formed in a semicircular shape, from the middle part 34a2 to the bottom part 34a3. However, the shape of the groove 34 is not limited to a shape in which the width is increased in a straight line manner from the inlet part 34a1 toward the middle part 34a2, and the width is increased in a curved line manner from the middle part 34a2 toward the bottom part 34a3. For example, the width of the groove 34 may be increased in a curved line manner in at least a part of the section from the inlet part 34a1 to the middle part 34a2, or the width of the groove 34 may be reduced in a straight line manner in at least a part of the section from the middle part 34a2 to the bottom part 34a3.

In this manner, because the width (length in the circumferential direction) of the groove 34 is increased from the inlet part 34a1 toward the radially outer side, the width at the inlet part 34a1 is smaller than the width of the space on the radially outer side of the inlet part 34a1. Thus, in the groove 34, viewed from the radial direction, the area of the inlet part 34a1 becomes smaller than the area of the space on the radially outer side of the inlet part 34a1, and the area is increased from the inlet part 34a1 toward the radially outer side.

Viewed from the extending direction E, the groove 34 is inclined to the rotation direction R side of the screw shaft 12, toward the radially inner side. In other words, the groove 34 is inclined to the rotation direction R side with respect to the radial direction, from the middle part 34a2 toward the inlet part 34a1. In more other words, viewed from the extending direction E, a straight line (straight line in the radial direction) that joins the center axis AX and the middle point of the middle part 34a2 is called as a straight line L1, and a straight line that joins the middle point of the middle part 34a2 and the middle point of the inlet part 34a1 is called as a straight line L2. The straight line L2 is inclined to the rotation direction R side with respect to the straight line L1, toward the radially inner side (middle point side of the inlet part 34a1).

In the groove 34, the length in the circumferential direction of the inlet part 34a1 is preferably the same as the length of the gap H in the radial direction, and for example, is preferably about 1 mm or more and 2 mm or less. Moreover, the length of the groove 34 in the circumferential direction of the middle part 34a2 (that is, the maximum width of the groove 34) is preferably longer than the length of the gap H in the radial direction.

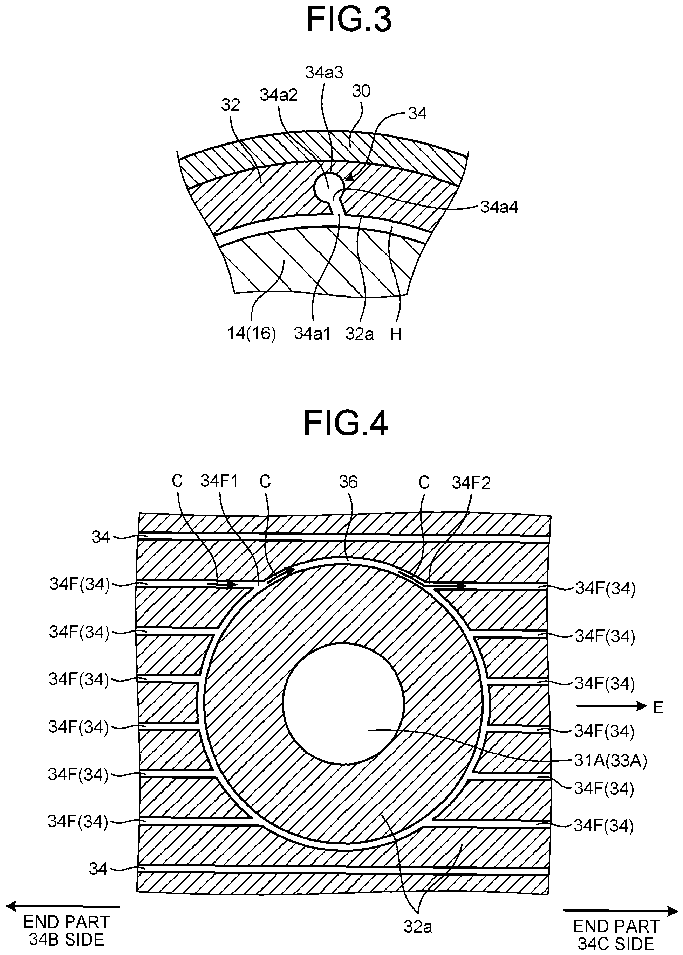

FIG. 3 is a schematic diagram illustrating another example of a groove according to the present embodiment. The shape of the groove 34 is not limited to a shape in which the width is increased from the inlet part 34a1 toward the radially outer side, as described in FIG. 2. For example, as illustrated in FIG. 3, the width of the groove 34 may also be constant in the radial direction, from the inlet part 34a1 to a middle part 34a4, and may be increased toward the radially outer side, from the middle part 34a4 to the middle part 34a2 on the radially outer side. The width of the groove 34 may also be increased in the middle part 34a4, and may be constant from the middle part 34a4 to the bottom part 34a3. In this case also, the width of the inlet part 34a1 is preferably smaller than the width (maximum width) of the middle part 34a2 on the radially outer side of the inlet part 34a1.

FIG. 4 is a schematic diagram illustrating the groove according to the present embodiment. FIG. 4 illustrates the shape of the groove 34 in the vicinity of the object feeding port 31A, when the inner peripheral surface 32a of the casing 10 is viewed from the center axis AX toward the radially outer side (portion illustrated by F1 in FIG. 1). As illustrated in FIG. 4, the groove 34 does not communicate with the object feeding port 31A (opening part 33A) on the inner peripheral surface 32a. More particularly, among the grooves 34, a groove 34F at a position close to the object feeding port 31A in the circumferential direction does not continue from the end part 34B to the end part 34C (see FIG. 1) in the extending direction E, and is interrupted in the vicinity of the object feeding port 31A. The groove 34F is on the end part 34B side of the object feeding port 31A, and the groove 34F extends from the end part 34B to an end part 34F1 in the extending direction E. The end part 34F1 does not communicate with the object feeding port 31A, and is placed on the end part 34B side of the object feeding port 31A. The groove 34F is at the end part 34C side of the object feeding port 31A, the groove 34F extends from an end part 34F2 to the end part 34C in the extending direction E. The end part 34F2 does not communicate with the object feeding port 31A, and is placed on the end part 34C side of the object feeding port 31A (opening part 33A).

The groove 34F at the end part 34B side of the object feeding port 31A and the groove 34F at the end part 34C side of the object feeding port 31A are connected by a connection groove 36 formed on the inner peripheral surface 32a. The connection groove 36 is formed on the periphery of a portion on the inner peripheral surface 32a, where the object feeding port 31A (opening part 33A) is provided. On the inner peripheral surface 32a, the connection groove 36 does not communicate with the object feeding port 31A, and connects the grooves 34F to one another by communicating with the grooves 34F. In the present embodiment, the connection groove 36 is connected to all the grooves 34F, and connects all the grooves 34F to one another. In the present embodiment, viewed from the radial direction, the connection groove 36 is a ring-shaped groove formed so as to surround the object feeding port 31A. However, the shape of the connection groove 36 is not limited to a ring shape, and is optional. By connecting the groove 34 to the connection groove 36 without connecting to the object feeding port 31A, it is possible to cause the separated liquid C that flows through the groove 34 to flow to the separated liquid discharging port 31C side via the connection groove 36, while suppressing the separated liquid C that flows in the groove 34 from returning to the casing 10 from the object feeding port 31A, as will be described below.

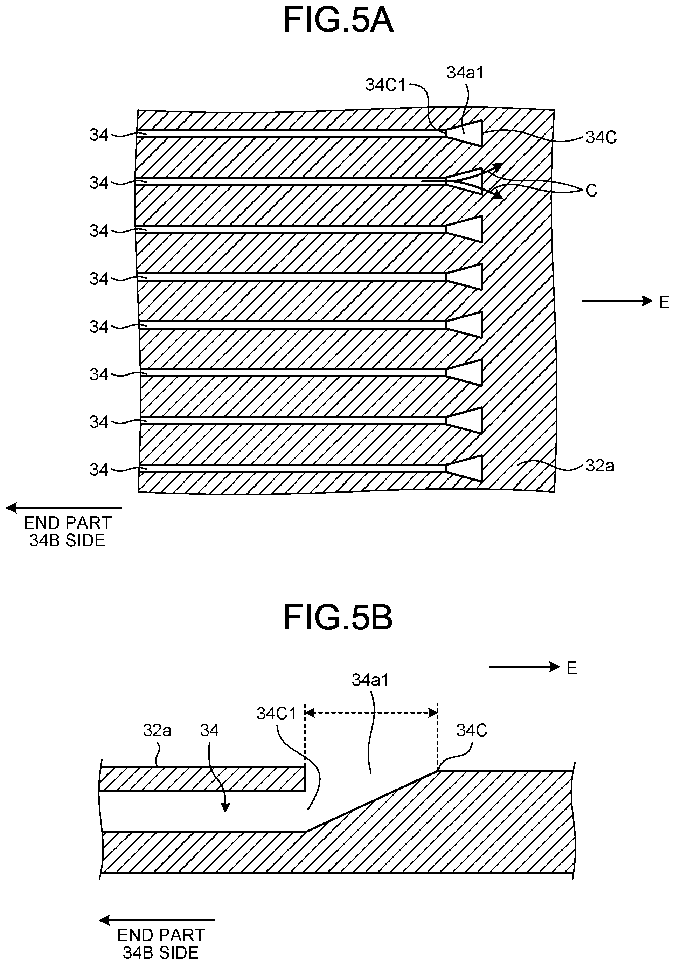

FIG. 5A and FIG. 5B are each a schematic diagram illustrating the groove according to the present embodiment. FIG. 5A illustrates the shape of the groove 34 in the vicinity of the end part 34C, when the inner peripheral surface 32a of the casing 10 is viewed from the center axis AX toward the radially outer side (portion illustrated by F2 in FIG. 1). FIG. 5B is a sectional view of the groove 34 in the vicinity of the end part 34C, and is a sectional view cut along the line F3-F3 in FIG. 2. As illustrated in FIG. 5A, in the groove 34, the width of the inlet part 34a1 of the end part 34C (length in the circumferential direction) is greater than the width of the inlet part 34a1 at the end part 34B side of the end part 34C. Thus, in the groove 34, the opening area of the inlet part 34a1 of the end part 34C is greater than the opening area of the inlet part 34a1 at the end part 34B side (object discharging port 31B side) of the end part 34C. More specifically, in the groove 34, the width of the inlet part 34a1 is increased from a position 34C1 toward the end part 34C. Moreover, as illustrated in FIG. 5B, the depth (length in the radial direction) of the groove 34 is reduced from the position 34C1 toward the end part 34C. The position 34C1 is a position on the end part 34B side of the end part 34C in the extending direction E, and is a position in the vicinity of the end part 34C.

Returning to FIG. 1, the first partition wall part 18 is a wall-shaped member provided from the first screw blade 14 to the second screw blade 16 adjacent to the first screw blade 14 in the extending direction E. The first partition wall part 18 is provided in the second space S2 in the conveyance acceleration section K1, and shields the second space S2 from the space S3 in the object conveyance section K2. Additionally, the first partition wall part 18 is provided between the object discharging port 31B and the object feeding port 31A, in this example, is provided on the end part 16B of the second screw blade 16. That is, the first partition wall part 18 is provided so as to separate the second space S2 and the space S3, which means that the first partition wall part 18 is provided at a boundary between the second space S2 and the space S3.

The second partition wall part 20 is a wall-shaped member provided from the first screw blade 14 to the second screw blade 16 adjacent to the first screw blade 14 in the extending direction E. The second partition wall part 20 is provided in the first space S1 in the conveyance acceleration section K1, and shields the first space S1 from the space S4 in the separated liquid conveyance section K3. Additionally, the second partition wall part 20 is provided between the separated liquid discharging port 31C and the object feeding port 31A, in this example, is provided on the end part 16C of the second screw blade 16. That is, the second partition wall part 20 is provided so as to separate the first space S1 and the space S4, which means that the second partition wall part 20 is provided at a boundary between the first space S1 and the space S4. However, the second partition wall part 20 is not a necessary component. The second partition wall part 20 suppresses the separated liquid C in the space S4 from flowing into the first space S1. However, even if the second partition wall part 20 is not provided, for example, the separated liquid C in the space S4 is suppressed from flowing into the first space S1, by being blocked by the object A accumulated in the first space S1. Moreover, even if the separated liquid C is flowed into the first space S1, the separated liquid C may be separated from the object A in the first space S1 again, and returned to the space S4.

The cover part 22 is provided in a region overlapping with the object feeding port 31A, between the first screw blade 14 and the second screw blade 16 that form the second space S2 in the conveyance acceleration section K1. The cover part 22 can suppress the pre-object A0 from the object feeding port 31A from being fed into the second space S2, by covering the outer periphery of the second space S2 in a section overlapping with the object feeding port 31A. However, the cover part 22 is not a necessary component. For example, if the object feeding port 31A is provided on a position not overlapping with the second space S2, it is possible to suppress the pre-object A0 from being fed into the second space S2, and thus the cover part 22 will not be required.

The feeding unit 24 is a device connected to the object feeding port 31A and that controls the feeding amount of the pre-object A0 into the casing 10. For example, the feeding unit 24 is an opening/closing valve, and feeds the pre-object A0 into the casing 10 by opening, and stops feeding the pre-object A0 into the casing 10 by closing. Moreover, the feeding unit 24 can adjust the feeding amount of the pre-object A0 by adjusting the opening degree. The feeding unit 24 controls the feeding amount of the pre-object A0 into the casing 10, by being controlled by the control unit 29. However, the feeding unit 24 is not limited to the opening/closing valve, as long as the feeding unit 24 can control the feeding amount of the pre-object A0 into the casing 10. For example, the feeding unit 24 may also be a pump for conveying sludge.

The discharge pump 26 is connected to the object discharging port 31B of the casing 10 via a discharge pipe 26A. The discharge pipe 26A is a pipe connected to the object discharging port 31B. The object A from the object discharging port 31B is introduced into the discharge pipe 26A. The discharge pump 26 is a pump provided on the discharge pipe 26A. When the discharge pump 26 is stopped, the object A transferred to the end part 30B of the casing 10 is stopped. Moreover, when the discharge pump 26 is being driven, the discharge pump 26 sucks the discharge pipe 26A. Hence, the object A in the casing 10 can be forcibly discharged from the object discharging port 31B. The discharge pump 26 can adjust the discharge amount of the object A in the casing 10, by being controlled by the control unit 29. However, the discharge pump 26 is not a necessary component, and for example, the object A may be discharged by gravity, without forcibly discharging the object A by the discharge pump 26.

The inclination adjusting unit 28 is fixed to the casing 10. The inclination adjusting unit 28 changes the inclination angle θ of the casing 10, by being controlled by the control unit 29. However, the inclination adjusting unit 28 is not a necessary component, and the inclination angle θ may be constant.

The control unit 29 is a control device that controls the operation of the screw-type separation device 1. The control unit 29 controls at least one of the rotation of the screw shaft 12 by the motor, the feeding amount of the pre-object A0 by the feeding unit 24, the operation of the discharge pump 26, which is the discharge amount of the object A in the casing 10, and the inclination angle θ by the inclination adjusting unit 28. For example, the control unit 29 is an arithmetic device, that is, a computer including a central processing unit (CPU), and controls the operation of the screw-type separation device 1 by the calculation of the CPU.

### Operation of Screw-type Separation Device

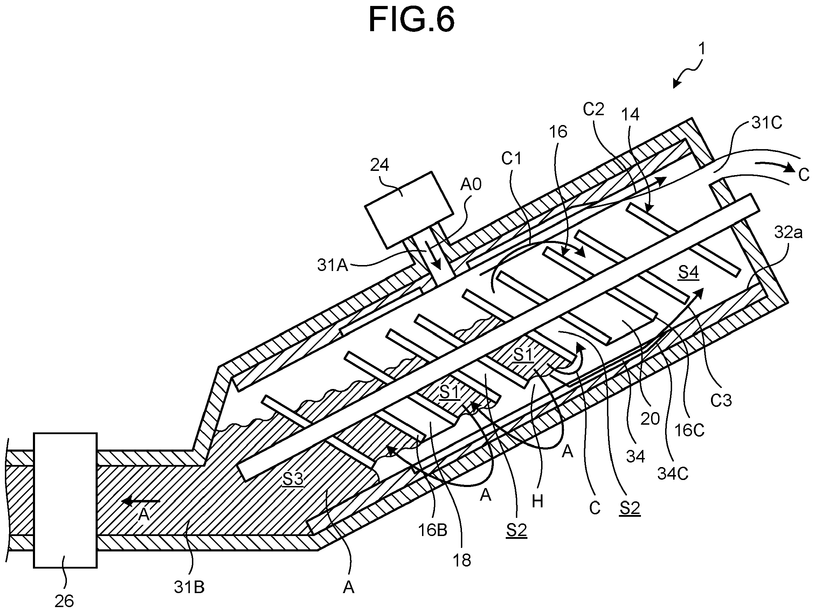

Next, an operation of the screw-type separation device 1 configured as described above, and behavior of an object will be described. FIG. 6 is a schematic diagram for explaining an operation of the screw-type separation device according to the present embodiment.

As illustrated in FIG. 6, the control unit 29 controls the feeding unit 24 and rotates the screw shaft 12, by feeding the pre-object A0 into the casing 10 from the object feeding port 31A. Because the position of the object feeding port 31A is overlapped with the conveyance acceleration section K1, the pre-object A0 from the object feeding port 31A is fed into the first space S1 in the conveyance acceleration section K1. The pre-object A0 fed into the first space S1 is transferred to the object discharging port 31B side, by gravity and by sliding on the surface of the first screw blade 14 and the second screw blade 16 in the conveyance acceleration section K1, while the liquid component is separated. Because the solid component of the pre-object A0 in the first space S1 is difficult to pass through a minute gap H, the solid component is suppressed from entering the second space S2. Moreover, the solid component of the pre-object A0 in the first space S1 is blocked from entering the space S4, by the second partition wall part 20 that isolates between the first space S1 and the space S4.

The screw-type separation device 1 conveys the pre-object A0 to the object discharging port 31B side, by causing the pre-object A0 to slide on the surface of the first screw blade 14 and the second screw blade 16 (hereinafter, appropriately referred to as the surface of the screw blade). However, if the pre-object A0 does not slide on the surface of the screw blade, the pre-object A0 rotates with the screw blade, and stays on the same position on the surface of the screw blade. Hence, it is difficult to transfer the pre-object A0 to the object discharging port 31B side. Alternatively, in the present embodiment, by forming the groove 34 on the inner peripheral surface 32a of the casing 10, the surface roughness of the inner peripheral surface 32a is increased, and the friction coefficient of the inner peripheral surface 32a is increased. Consequently, the pre-object A0 is made to slide easily on the surface of the screw blade, by reducing the ratio of the friction force applied to the pre-object A0 from the surface of the screw blade with respect to the friction force applied to the pre-object A0 from the inner peripheral surface 32a. That is, the pre-object A0 is made to slide easily on the surface of the screw blade, by using the inner peripheral surface 32a formed with the groove 34 as resistance. In this manner, by making the pre-object A0 to slide easily on the surface of the screw blade by the groove 34, the screw-type separation device 1 can appropriately convey the pre-object A0 to the object discharging port 31B side. In the screw-type separation device 1, the friction force applied to the pre-object A0 from the inner peripheral surface 32a (friction coefficient of the inner peripheral surface 32a) is preferably made greater than the friction force applied to the pre-object A0 from the surface of the screw blade (friction coefficient of the surface of the screw blade).

The pre-object A0 conveyed in the first space S1 in the conveyance acceleration section K1 flows into the space S3 in the object conveyance section K2 that communicates with the first space S1. The pre-object A0 that has flowed into the space S3 passes through the object discharging port 31B as the object A from which the liquid component is separated, and is discharged to the outside of the casing 10. The object A that has flowed into the space S3 passes through the object discharging port 31B by the discharge pump 26 driven by the control unit 29, and is forcibly discharged to the outside of the casing 10.

On the other hand, the liquid component separated from the pre-object A0 flows into the second space S2 from the first space S1 through the gap H, as the separated liquid C. The liquid level of the separated liquid C in the second space S2 is increased with an increase in the inflow amount of the separated liquid C into the second space S2. With an increase in the liquid level, as illustrated in a flow passage C1 illustrated in FIG. 6, the separated liquid C moves spirally in the second space S2 to the separated liquid discharging port 31C side, and is introduced into the space S4 in the separated liquid conveyance section K3. Moreover, as illustrated in a flow passage C2 in FIG. 6, the separated liquid C passes through a plurality of portions of the gap H, and is introduced into the space S4 in the separated liquid conveyance section K3. Furthermore, as illustrated in a flow passage C3 in FIG. 6, the separated liquid C flows into the groove 34 from the gap H. The separated liquid C that has flowed into the groove 34 flows in the groove 34 toward the separated liquid discharging port 31C side, with an increase in the liquid level in the groove 34. The separated liquid C is then introduced into the second space S2 and the space S4, from the inlet part 34a1 of the end part 34C. The separated liquid C that has introduced into the space S4 through the flow passages C1, C2, and C3 in this manner is discharged to the outside from the separated liquid discharging port 31C.

In this manner, in the present embodiment, in addition to the flow passage C1 that passes through the second space S2 and the flow passage C2 that passes through the gap H, the flow passage C3 that passes through the groove 34 is also set as a flow passage of the separated liquid C to the space S4. By increasing the number of flow passages of the separated liquid C in this manner, it is possible to reduce pressure loss in a flow passage of the separated liquid C in the casing 10, and appropriately discharge the separated liquid C. In the groove 34, for example, the width of the inlet part 34a1 is made small to the same extent as the gap H. Hence, it is possible to suppress the solid component of the pre-object A0 from entering, while allowing the separated liquid C to enter. Moreover, because the groove 34 is inclined to the rotation direction R side of the screw shaft 12, it is further possible to preferably suppress the solid component from entering from the inlet part 34a1. Furthermore, in the present embodiment, at least one of the first screw blade 14, the second screw blade 16, and the second casing 32 is preferably made of resin. By making at least one of the above by resin, it is possible to increase the shape accuracy, design the gap H to be small, and suppress the solid component from passing through the gap H.

As described above, the screw-type separation device 1 according to the present embodiment includes the casing 10, the screw shaft 12, the first screw blade 14, and the second screw blade 16. In the casing 10, the object discharging port 31B that discharges the dehydrated object A is provided on one end part 30B side, and the separated liquid discharging port 31C that discharges the separated liquid C separated from the pre-object A0 by dehydration, is provided on the other end part 30C side. The screw shaft 12 is provided inside the casing 10, and extends in the extending direction E that is a direction from the end part 30B toward the other end part 30C. The first screw blade 14 extends spirally on the outer peripheral surface of the screw shaft 12. The second screw blade 16 extends spirally on the outer peripheral surface of the screw shaft 12 such that a predetermined gap is formed with respect to the first screw blade 14 in the extending direction E. In the casing 10, the groove 34 is formed on the inner peripheral surface 32a.

In the screw-type separation device 1 according to the present embodiment, the groove 34 is formed on the inner peripheral surface 32a of the casing 10. Hence, the object A is made to slide easily on the surface of the screw blade, by reducing the ratio of the friction force applied to the object A from the surface of the screw blade, with respect to the friction force applied to the object A from the inner peripheral surface 32a. Consequently, with the screw-type separation device 1 according to the present embodiment, it is possible to appropriately convey the object A to the object discharging port 31B, and suppress a decrease in the discharge efficiency of the object A. Moreover, because the separated liquid C can flow through the groove 34, the screw-type separation device 1 can increase the flow passage of the separated liquid C to the separated liquid discharging port 31C. Thus, with the screw-type separation device 1, it is possible to reduce the pressure loss in the flow passage of the separated liquid C in the casing 10, and appropriately discharge the separated liquid C.

Moreover, the groove 34 extends in the extending direction E. By configuring the screw-type separation device 1 such that the groove 34 extends in the extending direction E, the groove 34 can be used as a flow passage of the separated liquid C to the separated liquid discharging port 31C. Hence, it is possible to reduce the pressure loss in the flow passage of the separated liquid C in the casing 10, and appropriately discharge the separated liquid C.

Furthermore, in the groove 34, the width of the inlet part 34a1 that is opened on the inner peripheral surface 32a of the casing 10 is smaller than the width of the space (middle part 34a2) on the radially outer side of the inlet part 34a1. By reducing the width of the inlet part 34a1 of the groove 34, the screw-type separation device 1 can suppress the object A, which is a solid material, from entering the groove 34 and prevent blockage in the groove 34. Moreover, by increasing the width of the space on the radially outer side of the inlet part 34a1, the screw-type separation device 1 can increase the flow passage area through which the separated liquid C flows. Thus, with the screw-type separation device 1, it is possible to appropriately discharge the separated liquid C through the groove 34.

Still furthermore, the width of the groove 34 is increased from the inlet part 34a1 toward the radially outer side. By gradually increasing the width of the groove 34, the screw-type separation device 1 can suppress the pressure loss in the groove 34, and cause the separated liquid C to flow appropriately.

Still furthermore, viewed from the extending direction E, the groove 34 is inclined to the rotation direction R side of the screw shaft 12 toward the radially inner side. By making the groove 34 inclined to the rotation direction R side, the screw-type separation device 1 can suppress the object A, which is a solid material, from entering the groove 34, and prevent blockage in the groove 34.

Still furthermore, in the groove 34, the opening area of the inlet part 34a1 in the end part 34C at the separated liquid discharging port 31C side is greater than the opening area of the inlet part 34a1 at the object discharging port 31B side of the end part 34C. By increasing the opening area of the end part 34C that is an outlet of the separated liquid C that flows through the groove 34, the screw-type separation device 1 can suppress the pressure loss and appropriately discharge the separated liquid C.

The casing 10 includes the first casing 30, and the second casing 32 inserted into the inside of the first casing 30 and the inner peripheral surface 32a of which is formed with the groove 34. For example, by forming the casing 10 by different members, it is possible to increase the shape accuracy of the second casing 32 formed with the groove 34, and design the gap H to be small. Thus, with the screw-type separation device 1, by making the gap H to be small, it is possible to preferably suppress a solid component of the pre-object A0 from passing through the gap H, and increase the discharge efficiency of the object A and the cleaning degree of the separated liquid C.

In the casing 10, at least a portion formed with the groove 34 is made of resin. By making the portion formed with the groove 34 (in the present example, the second casing 32) made of resin, it is possible to increase the shape accuracy, and design the gap H to be small. Moreover, by using resin, it is possible to reduce the manufacturing cost.

Moreover, the casing 10 according to the present embodiment is a casing for the screw-type separation device 1, and stores the screw 11 (unit including the screw shaft 12, the first screw blade 14, and the second screw blade 16) inside. In the casing 10, the groove 34 is formed on the inner peripheral surface 32a. In this manner, by forming the groove 34 on the inner peripheral surface 32a of the casing 10 for storing the screw 11, it is possible to suppress a decrease in the discharge efficiency of the object A.

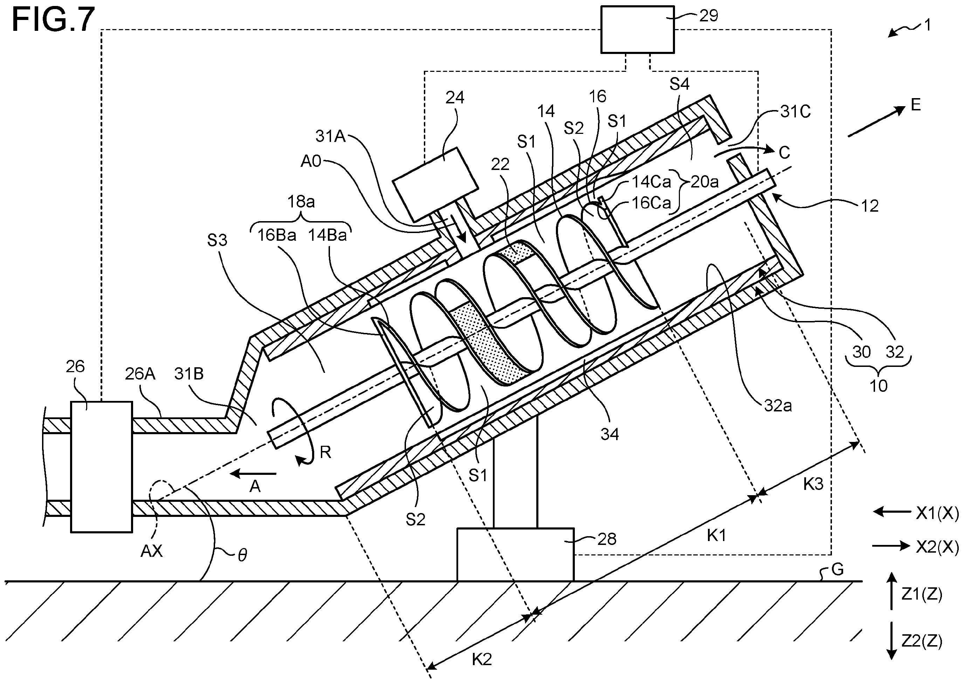

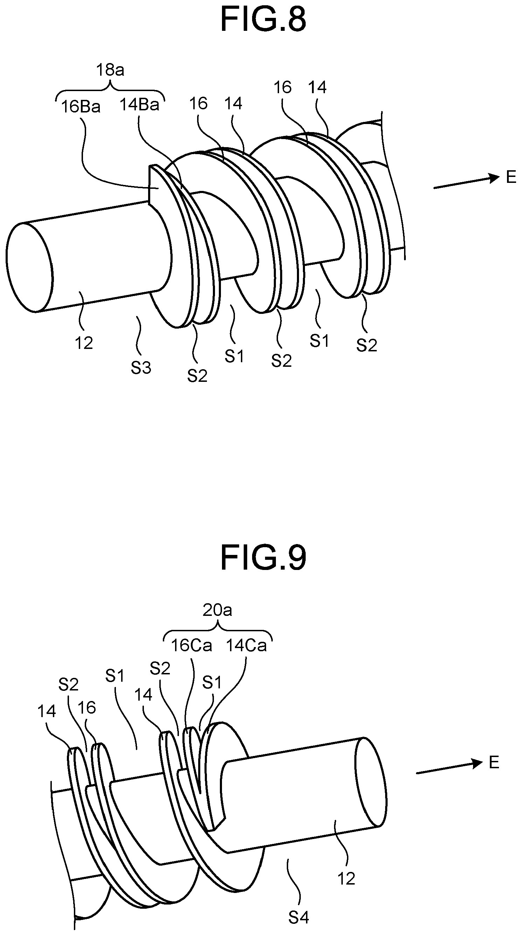

Next, another example of the first partition wall part and the second partition wall part will be described. In the above description, the first partition wall part 18 and the second partition wall part 20 are provided between the first screw blade 14 and the second screw blade 16. However, as illustrated in FIG. 7 to FIG. 9, a first partition wall part 18a and a second partition wall part 20a may be formed by an end part of the first screw blade 14 and an end part of the second screw blade 16. FIG. 7 is a partial sectional view of a screw-type separation device according to another example of the present embodiment. FIG. 8 and FIG. 9 are each a schematic diagram of a screw according to the other example of the present embodiment. FIG. 8 illustrates an end part of the first screw blade 14 and the second screw blade 16 on the object discharging port 31B side. FIG. 9 illustrates an end part of the first screw blade 14 and the second screw blade 16 on the separated liquid discharging port 31C side.

As illustrated in FIG. 7 and FIG. 8, in this example, an end part 14Ba on the object discharging port 31B side of the first screw blade 14 and an end part 16Ba on the object discharging port 31B side of the second screw blade 16 are placed on the same position in the extending direction E. Moreover, pitch of the first screw blade 14 and the second screw blade 16 (length between the surface of the first screw blade 14 and the surface of the second screw blade 16 adjacent to each other in the extending direction E) is constant at the extending direction E side (separated liquid discharging port 31C side) of the end part 14Ba (end part 16Ba). However, pitch in the vicinity of the end part 14Ba (end part 16Ba) is reduced toward the end part 14Ba (end part 16Ba) side, and the end part 14Ba and the end part 16Ba come into contact with each other. Thus, the second space S2 between the first screw blade 14 and the second screw blade 16 is reduced toward the end part 14Ba (end part 16Ba), is closed at a contact position of the end part 14Ba and the end part 16Ba, and is separated from the space S3. That is, in this example, the end part 14Ba and the end part 16Ba configure the first partition wall part 18a that separates the second space S2 and the space S3.

Similarly, as illustrated in FIG. 7 and FIG. 9, an end part 14Ca on the separated liquid discharging port 31C side of the first screw blade 14 and an end part 16Ca on the separated liquid discharging port 31C side of the second screw blade 16 are placed on the same position in the extending direction E. Moreover, pitch of the first screw blade 14 and the second screw blade 16 is constant at a side (object discharging port 31B side) opposite to the extending direction E of the end part 14Ca (end part 16Ca). However, pitch in the vicinity of the end part 14Ca (end part 16Ca) is reduced toward the end part 14Ca (end part 16Ca) side, and the end part 14Ca and the end part 16Ca come into contact with each other. Thus, the first space S1 between the first screw blade 14 and the second screw blade 16 is reduced toward the end part 14Ca (end part 16Ca), is closed at a contact position of the end part 14Ca and the end part 16Ca, and is separated from the space S4. That is, in this example, the end part 14Ca and the end part 16Ca configure the second partition wall part 20a that separates the first space S1 and the space S4.

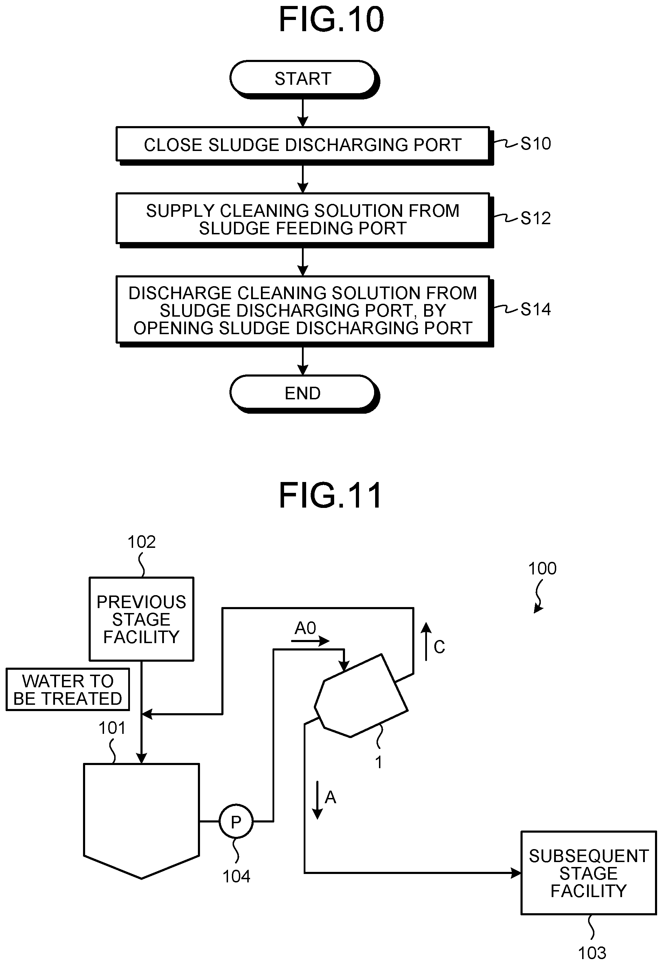

FIG. 10 is a flowchart for explaining a cleaning method of the screw-type separation device according to the present embodiment. To clean the screw-type separation device 1, the supply of the pre-object A0 is stopped, and the object A is discharged from the discharge pump 26 as much as possible. Then, as illustrated in FIG. 10, the object discharging port 31B of the screw-type separation device 1 is closed (step S10; step of closing). In the present embodiment, the object discharging port 31B is closed by stopping the discharge pump 26. However, a method of closing the object discharging port 31B is optional. For example, when an opening/closing valve is provided on the object discharging port 31B, the object discharging port 31B may be closed by closing the opening/closing valve. Moreover, the separated liquid discharging port 31C may also be closed with the object discharging port 31B.

Then, while the object discharging port 31B is closed, cleaning solution is supplied to the casing 10 from the object feeding port 31A (step S12; step of accumulating). At step S12, because the object discharging port 31B is closed, the cleaning solution is accumulated in the casing 10. For example, the cleaning solution is water. The cleaning solution supplied to the casing 10 also enters the groove 34, and is accumulated in the groove 34. Additionally, because the pressure inside the casing 10 is relatively increased by the cleaning solution, even if the groove 34 is clogged with a solid component, the cleaning solution can push out the solid material and flow into the groove 34. The screw shaft 12 may also be rotated after supplying the cleaning solution at step S12. By rotating the screw shaft 12, it is possible to cause the cleaning solution to flow in the casing, and appropriately remove the solid component in the groove 34.

Then, the separated liquid discharging port 31C is opened (step S14; step of discharging). Consequently, the cleaning solution accumulated in the casing 10 and the groove 34 is discharged from the separated liquid discharging port 31C with the solid material.

In this manner, the cleaning method of the screw-type separation device 1 preferably includes the step of closing, the step of accumulating, and the step of discharging. At the step of closing, the object discharging port 31B is closed. At the step of accumulating, the cleaning solution is accumulated in the casing 10 and the groove 34, by supplying the cleaning solution into the casing 10 while the object discharging port 31B is closed. At the step of opening, the cleaning solution accumulated in the casing 10 and the groove 34 is discharged from the object discharging port 31B, by opening the object discharging port 31B after the step of accumulating. In the screw-type separation device 1, by making the shape of the groove 34 as described above, the groove 34 is hardly clogged with solid material. However, even if the groove 34 is clogged with solid material, it is possible to preferably remove the solid material from the groove 34 by cleaning in this manner.

### First Example

Next, a wastewater treatment system as a first example including the screw-type separation device 1 described above will be explained. FIG. 11 is a configuration diagram illustrating a part of a wastewater treatment system according to a first example.

As illustrated in FIG. 11, a wastewater treatment system 100 according to the first example includes a sedimentation basin 101, a previous stage facility 102 disposed at a previous stage of the sedimentation basin 101, a subsequent stage facility 103 disposed at a subsequent stage of the sedimentation basin 101, an extraction pump 104, and the screw-type separation device 1. The sedimentation basin 101 is a solid-liquid separation tank that sediments and separates water to be treated supplied from the previous stage facility 102 into separated liquid and sludge. For example, the previous stage facility 102 is a facility that treats organic wastewater such as sewage and that includes various treatment tanks such as a reaction tank. For example, the subsequent stage facility 103 is a facility that includes an incinerator and the like, and that incinerates or disposes sludge (concentrated sludge) discharged from the screw-type separation device 1. The extraction pump 104 is a sludge extraction unit that extracts sludge from the sedimentation basin 101 and that supplies the extracted sludge to the screw-type separation device 1. The screw-type separation device 1 is provided above (direction away from the ground surface of) the sedimentation basin 101 in the vertical direction.

In the wastewater treatment system 100, at least a part of the water to be treated discharged from the previous stage facility 102 is supplied to the sedimentation basin 101. In the sedimentation basin 101, the supplied water to be treated is sedimented and separated into separated liquid and sludge. The separated sludge is then extracted by the extraction pump 104 from the lower part of the sedimentation basin 101, and is supplied to the screw-type separation device 1. The extracted sludge is conveyed to the inside of the screw-type separation device 1 as the pre-object A0, through the object feeding port 31A (see FIG. 1).

In the screw-type separation device 1, the separated liquid C is separated similarly to the embodiment described above. The separated liquid C that has been separated is returned to the sedimentation basin 101. The object A that has been separated (that has been dehydrated) is conveyed to the subsequent stage facility 103 as concentrated sludge, and is incinerated or disposed. In this manner, the wastewater treatment according to the first example is performed.

In the first example as described above, by using the screw-type separation device 1 according to the embodiment described above, the pre-object A0 extracted from the sedimentation basin 101 is concentrated, and the separated liquid C is returned to the sedimentation basin 101. In this manner, it is possible to improve the concentration of the object A, and significantly improve the maintainability of the sedimentation basin 101. That is, in many cases, intermediate water is present in the sedimentation basin 101. If such intermediate water is present, moisture is preferentially extracted over sludge (pre-object A0) during the extraction of sludge (pre-object A0). Thus, there is the problem that the concentration does not increase even if sludge (pre-object A0) is compressed. In regard to this problem, in the first example described above, the screw-type separation device 1 is disposed at a subsequent stage of the sedimentation basin 101. Hence, it is possible to only separate the intermediate water from the extracted sludge (pre-object A0), and return the separated intermediate water to the sedimentation basin 101. Thus, because the concentration of sludge (pre-object A0) can be improved, it is possible to improve the concentration of sludge (pre-object A0) even if the sedimentation basin 101 contains intermediate water as in the conventional example. In addition, because the screw-type separation device 1 described above can be manufactured at a low cost, the wastewater treatment system 100 can also be implemented at a low cost. Moreover, even if the casing 10 is clogged with sludge (pre-object A0), it is possible to easily remove the clog, by reversely rotating the screw shaft 12 with respect to the rotation direction R.

### First Modification of First Example

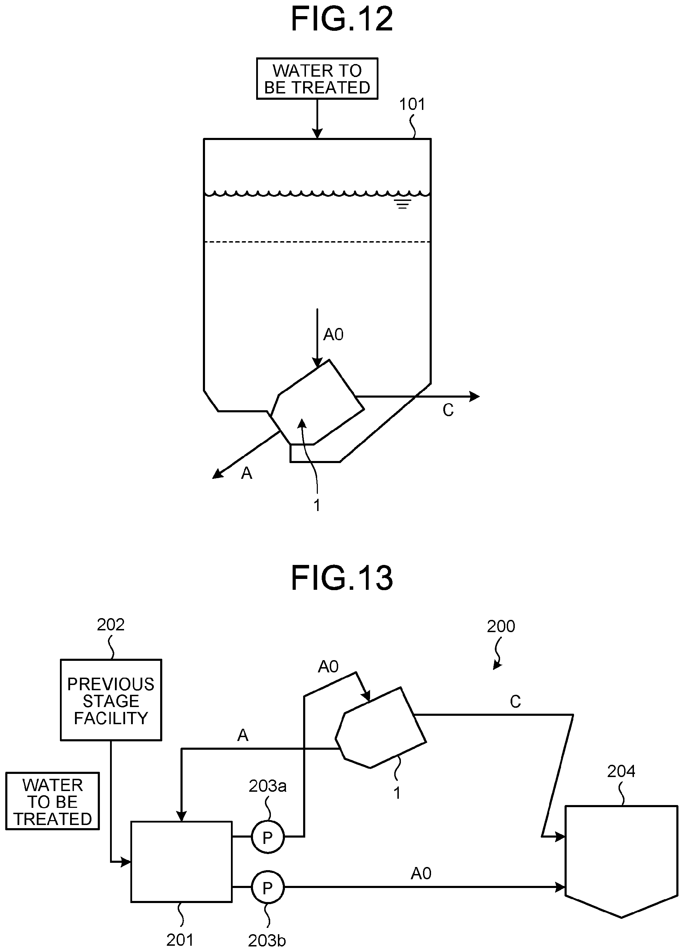

Next, a modification of the first example described above will be explained. FIG. 12 is a schematic diagram illustrating a sedimentation basin for explaining a modification of the first example. As illustrated in FIG. 12, in a first modification, the screw-type separation device 1 according to one embodiment is provided on the lower part of the sedimentation basin 101. Then, the sludge that has sedimented on the lower part of the sedimentation basin 101 is supplied as the pre-object A0, into the screw-type separation device 1 through the object feeding port 31A (see FIG. 1) using a sludge recovery device (not illustrated) such as a funnel. The screw-type separation device 1 then discharges the concentrated sludge (object A) to the outside, and returns the separated liquid C that has been separated to the sedimentation basin 101, through the inside or outside by a pipe (not illustrated) and the like. The separated liquid C may also be discharged to the outside. The other configuration is the same as that of the first example described above.

### Second Modification of First Example

Moreover, as a second modification, when a gravity settling tank such as the sedimentation basin 101 is provided at a previous stage of the screw-type separation device 1, a picket fence (not illustrated), which is formed by a rod-like member disposed upright on the upper side of a rake for scraping sludge, may also be provided in the sedimentation basin 101. By providing the picket fence, it is possible to accelerate the sedimentation of sludge, or what is called flocculation in the sedimentation basin 101. Thus, the screw-type separation device 1 can more effectively separate the object A and the separated liquid C, and significantly improve the solid-liquid separation properties.

### Second Example

Next, a wastewater treatment system as a second example including the screw-type separation device 1 according to one embodiment described above will be explained. FIG. 13 is a configuration diagram illustrating a part of a wastewater treatment system according to the second example.

As illustrated in FIG. 13, a wastewater treatment system 200 according to the second example includes a reaction tank 201, a previous stage facility 202 disposed at a previous stage of the reaction tank 201, a sedimentation basin 204 disposed at a subsequent stage of the reaction tank 201, extraction pumps 203a and 203b, and the screw-type separation device 1. The screw-type separation device 1 is provided above (direction away from the ground surface) the reaction tank 201 and the sedimentation basin 204 in the vertical direction.

For example, the reaction tank 201 is configured by a plurality of biological reaction tanks. For example, the biological reaction tanks that configure the reaction tank 201 are various biological reaction tanks such as an anaerobic tank, an oxygen-free tank, and an aerobic tank. For example, the previous stage facility 202 is a facility including a sand basin, an inclined plate sedimentation basin, or the like, that treats organic wastewater such as sewage. The extraction pump 203a is a sludge extraction unit that extracts sludge such as activated sludge from the reaction tank 201, and that supplies the extracted sludge to the screw-type separation device 1 as the pre-object A0. Similarly, the extraction pump 203b is a sludge extraction unit that extracts sludge from the reaction tank 201, and that supplies the extracted sludge to the sedimentation basin 204 in a subsequent stage. The sedimentation basin 204 is a solid-liquid separation tank that sediments and separates the water to be treated and the separated liquid C each supplied from the reaction tank 201 and the screw-type separation device 1, to the separated liquid C and sludge (object A).

In the wastewater treatment system 200 according to the second example, at least a part of the water to be treated discharged from the previous stage facility 202 is supplied to the reaction tank 201. In the reaction tank 201, biological treatment such as nitrification and denitrification is performed on the water to be treated. The activated sludge in the reaction tank 201 is extracted by the extraction pumps 203a and 203b. The sludge extracted by the extraction pump 203a is supplied to the screw-type separation device 1 as the pre-object A0, and is conveyed to the inside through the object feeding port 31A (see FIG. 1).

In the screw-type separation device 1, the conveyed sludge (pre-object A0) is concentrated, and the separated liquid C is separated. The separated liquid C that has been separated is supplied to the sedimentation basin 204 in a subsequent stage. The sludge and water to be treated extracted from the reaction tank 201 by the extraction pump 203b is supplied to the sedimentation basin 204. In the sedimentation basin 204, similar to the first example, solid-liquid separation treatment is performed by gravitational sedimentation. In this manner, the wastewater treatment according to the second example is performed.

In the second example described above, by using the screw-type separation device 1, sludge (pre-object A0) is extracted from the reaction tank 201, compressed and concentrated, and the compressed and concentrated sludge (object A) is returned to the reaction tank 201. Moreover, the separated liquid C is supplied to the sedimentation basin 204 serving as the solid-liquid separation tank. Consequently, it is possible to solve the following problems.

That is, conventionally, electric power used for operating a return pump (not illustrated) for returning sludge (object A) to the reaction tank 201 from the sedimentation basin 204 has been extremely large. However, with the second example, the sludge (object A) compressed and concentrated using the screw-type separation device 1 can be returned to the reaction tank 201. Hence, it is possible to significantly reduce electric power required for returning the sludge (object A). Moreover, by using the screw-type separation device 1, it is possible to sufficiently perform solid-liquid separation. Consequently, because the frequency of sludge extraction from the sedimentation basin 204 can be reduced, it is possible to reduce power consumption of the wastewater treatment system 200 and save energy.

Moreover, conventionally, when a separation film is provided in the reaction tank 201, there has been problems such as the initial cost and burden required for maintaining the facility are increased. However, by implementing the screw-type separation device 1 at a low cost instead of a separation film, it is possible to reduce the initial cost. Moreover, because the screw-type separation device 1 can be maintained easily, it is possible to reduce the burden of maintenance, and reduce the maintenance cost.

Furthermore, with the second example, mixed liquor suspended solids (MLSS) in the reaction tank 201 can be increased. Hence, it is possible to reduce the load in the sedimentation basin 204, and reduce the power consumption of the extraction pumps 203a and 203b used for extracting sludge from the reaction tank 201. Consequently, it is possible to save energy in the wastewater treatment system 200.

Still furthermore, in each example, sludge (pre-object A0) to be fed into the screw-type separation device 1 may not be sludge added with a flocculating agent. That is, a flocculating agent may not be added to the sludge in the sedimentation basin 101, and a flocculating agent may not be added to the sludge in the reaction tank 201. Because the screw-type separation device 1 can also separate sludge by gravity, it is also possible to suppress a decrease in separation efficiency of sludge not containing a flocculating agent.

The embodiment of the present invention has been described in detail. However, the present invention is not limited to the embodiment described above, and various modifications may be made based on the technical idea of the present invention. Moreover, the components described above include components that can be easily assumed by those skilled in the art, components that are substantially the same, and components within a so-called range of equivalents. Furthermore, the components described above can be appropriately combined. Still furthermore, various omissions, substitutions, or changes of the components may be made without departing from the spirit of the embodiment described above. For example, the numerical values given in the embodiment described above are merely examples, and different numerical values may be used as necessary.

In the embodiment described above, the screw shaft 12 is formed in a cylindrical shape. However, the shape of the screw shaft 12 is not limited thereto. For example, the screw shaft 12 may be formed in what is called an enlarged diameter shape in which the diameter of the screw shaft 12 is gradually increased from the end part 30C to the end part 30B side of the casing 10.

Moreover, in the embodiment described above, the solid-liquid separation device that separates sludge into solid matter and moisture is used as an example. However, the embodiment described above is not limited to separate sludge into solid and liquid, and may be applicable to various methods of separating solid and liquid.

Moreover, in the embodiment described above, the position of the separated liquid discharging port 31C may be changed in various ways.

Furthermore, in the embodiment described above, the separated liquid C is transferred through the gap H. However, for example, the separated liquid C may also be transferred by additionally providing a filtration unit formed in a mesh-like shape or that has a large number of minute holes on at least a part of the first screw blade 14 and the second screw blade 16.

Still furthermore, the screw-type separation device 1 according to the embodiment described above may also be used as a pre-concentrator for a dehydrator, a simple concentrator for private use, a confluence improvement screen, and the like.

In the first example in one embodiment described above, sludge extracted by the extraction pump 104 is sludge sedimented in the sedimentation basin 101. However, sludge is not limited to the sedimented sludge. For example, floating sludge tends to generate in the sedimentation basin 101 during summer and the like. The floating sludge may be extracted by the extraction pump 104 and supplied to the screw-type separation device 1.

In the first example described above, the screw-type separation device 1 according to one embodiment is combined with the sedimentation basin 101. However, the form is not limited thereto. More specifically, for example, a filtration concentration device may also be combined with the screw-type separation device 1. In this case, the screw-type separation device 1 described above can be mounted on a bottom part of a line that extracts sludge in a filtration concentration device or a bottom part of a filtration concentration device. In this example, the filtration concentration device is intermittently operated. Hence, the concentrated sludge is temporarily accumulated in the filtration concentration device, and sludge is extracted from the lower part. Thus, supernatant liquid accumulated above the sludge is extracted with the concentrated sludge, when the sludge is temporarily accumulated. Consequently, the same problem as that in the first example described above is present. However, by using the screw-type separation device 1 according to the one embodiment, it is possible to separate the supernatant liquid (supernatant water) during the extraction of sludge, and stably increase the concentration of the concentrated sludge.

The embodiment, examples, and modifications of the present invention have been described. However, the embodiment is not limited to the content of the embodiments and the like. Moreover, the components described above include components that can be easily assumed by those skilled in the art, components that are substantially the same, and components within a so-called range of equivalents. Furthermore, the components described above can be appropriately combined. Still furthermore, various omissions, substitutions, and changes of the components may be made without departing from the spirit of the embodiment or the like described above.

### Reference Signs List

- 1: screw-type separation device
- 10: casing
- 12: screw shaft
- 14: first screw blade
- 16: second screw blade
- 18: first partition wall part
- 20: second partition wall part
- 30: first casing
- 30B, 30C: end part
- 31A: object feeding port
- 31B: object discharging port
- 31C: separated liquid discharging port
- 32: second casing
- 32a: inner peripheral surface
- 34: groove
- 34a1: inlet part
- K1: conveyance acceleration section
- K2: object conveyance section
- K3: separated liquid conveyance section
- S1: first space
- S2: second space
- S3, S4: space

## Claims

1. A screw-type separation device comprising:
a casing including
an object discharging port provided on one end part side and discharging an object having been dehydrated, and
a separated liquid discharging port provided on another end part side and discharging separated liquid having been separated from the object by dehydration;
a screw shaft provided inside the casing and extending in an extending direction that is a direction from the one end part to the another end part;
a first screw blade extending spirally on an outer peripheral surface of the screw shaft; and
a second screw blade extending spirally on the outer peripheral surface of the screw shaft such that a predetermined gap is formed with respect to the first screw blade in the extending direction, wherein
a groove is formed on an inner peripheral surface of the casing.

2. The screw-type separation device according to claim 1, wherein the groove extends in the extending direction.

3. The screw-type separation device according to claim 2, wherein in the groove, width of an inlet part that is opened on the inner peripheral surface of the casing is smaller than width of a space on a radially outer side of the inlet part.

4. The screw-type separation device according to claim 3, wherein width of the groove is increased from the inlet part toward a radially outer side.

5. The screw-type separation device according to any one of claims 2 to 4, wherein viewed from the extending direction, the groove is inclined to a rotation direction side of the screw shaft toward a radially inner side.

6. The screw-type separation device according to any one of claims 2 to 5, wherein in the groove, an opening area of the inlet part that is opened on the inner peripheral surface of the casing in an end part at the separated liquid discharging port side is greater than an opening area of the inlet part at the object discharging port side of the end part.

7. The screw-type separation device according to any one of claims 1 to 6, wherein
the casing includes
a first casing, and
a second casing that is inserted into inside of the first casing and an inner peripheral surface of which is formed with the groove.

8. The screw-type separation device according to any one of claims 1 to 7, wherein in the casing, at least a portion formed with the groove is made of resin.

9. A casing for a screw-type separation device that stores therein a screw, the screw including
a screw shaft extending in an extending direction that is a direction from one end part to another end part,
a first screw blade extending spirally on an outer peripheral surface of the screw shaft, and
a second screw blade extending spirally on the outer peripheral surface of the screw shaft such that a predetermined gap is formed with respect to the first screw shaft in the extending direction,
wherein, a groove is formed on an inner peripheral surface of the casing.

10. A wastewater treatment system comprising:
a solid-liquid separation tank that separates sludge from organic wastewater, and
the screw-type separation device according to any one of claims 1 to 8, wherein
the screw-type separation device is capable of concentrating sludge discharged from the solid-liquid separation tank, and returning the separated liquid generated when the sludge is concentrated to the solid-liquid separation tank.

11. The wastewater treatment system according to claim 10, wherein the screw-type separation device is provided in the solid-liquid separation tank.

12. A wastewater treatment system comprising:
a reaction tank that performs biological treatment on organic wastewater;
a solid-liquid separation tank that separates sludge from the organic wastewater; and
the screw-type separation device according to any one of claims 1 to 8, wherein
the screw-type separation device is capable of extracting sludge from the reaction tank, concentrating the extracted sludge, returning the concentrated sludge to the reaction tank, and supplying the separated liquid generated when the sludge is concentrated to the solid-liquid separation tank.

13. A cleaning method of the screw-type separation device according to any one of claims 1 to 8, the cleaning method comprising:
a step of closing the object discharging port;
a step of accumulating a cleaning solution in the casing and the groove, by supplying the cleaning solution into the casing while the object discharging port is closed; and
a step of discharging the cleaning solution accumulated in the casing and the groove from the object discharging port, by opening the object discharging port after the step of accumulating.
